# EUROPEAN PATENT APPLICATION

(11) **EP 3 038 040 A1**
(43) Date of publication of application: **29.06.2016**
(21) Application number: 14461601.8
(22) Date of filing: 22.12.2014
(51) Int. Cl.: G06Q 30/02

(54) **Method of reading and writing data based on a document repository**

(71) Applicant: Sensi Soft Sp. z o.o., 02-532 Warszawa (PL)
(72) Inventor: Batory, Stefan Dominik, 02-722 Warszawa (PL)
(74) Representative: Sielewiesiuk, Jakub

(57) **Abstract**

The invention relates to a method of reading and writing data based on a document repository in advanced advertising services, where the documents contain objects - that is, advertising or auction data content and metadata content - that is related to the object, and are in a fixed format, especially in XML, CSV, or JSON characterized in that includes the following steps:
a) Verification of the data
b) Submittal of verified data to converter, which converts the data to the chosen internal format of the importer.
c) Transfer of data in the aforementioned internal format of the importer from the converter to the transformer.
d) Transfer data from the transformer to the next subsystem.
e) Creation of the standard document type AdvertDocument in JSON format with created and verified data by the aforementioned subsystem.
f) Separation of the advertising or auction data type from metadata content and processing them separately, preferably in multiple queues.
g) Linking of advertising or auction data with metadata and saving them in the database.

## Description

The invention relates to a way to read and write data based on document repository in advanced advertising services, where the documents contain objects - that is, advertising or auction data content and metadata content - that is related to the object, and are in a fixed format, especially in XML, CSV, or JSON.

One of the main criteria for success of an advertising service is the quantity of ads/notices located in its database and its ability to integrate with the computer systems, which offer such content. Accumulated experience, especially from working with companies like Harte-Hanks and Friday Media that are generating large revenues in conversion income from the press paper to Internet indicates that having a flexible (allowing for easy-to-use data sources) and resistant to errors data import system is a key element for the success of the repository.

Another aspect, which is to be taken into account when designing a system that stores data, is to take into account multiple formats used by the various operators (or customers). Now actually any bigger advertising service has its own data exchange format, despite the different initiatives taken to unify, such as i.e. the AdsML Framework.

Another issue, worth noting for import systems, is to allow flexible mapping content from external data systems to the internal documents structure. This functionality is important in particular for type of ads and geographical regions, to which the data content is assigned, as well as for the information (Fields) typical for a particular implementation (the so-called *custom fields*).

The popular methods of data aggregation are as follows:
- The API (Application Programming Interface), which requires the recipient to create communication module operating in accordance with requirements specified by the service provider,
- Via files in a format specified by the service provider, which requires tools for generating and processing of such files,
- By synchronizing databases, which requires an appropriate interface that can communicate with providers and recipients.

Usually, any mechanisms allowing data aggregation are dedicated systems designed for one specific case (customer) and because of that they have very limited functionality, force the use of a strictly defined format, and their availability and flexibility is by definition very limited.

The innovation of the invention created by Sensi Soft is based on an enormous flexibility and availability, which is not offered by any of the existing solutions in the market. Beneficiaries of the system, in addition to being able to import their own data, have full access to data already existing in the repository, from which they can select what they are interested in, and in the format suitable for them.

For example, a car dealership with its own web page with classified ads, can import its own Toyota classified ads to the repository, and then download from the same repository Ford classified ads from another user in a format supported by its service.

According to our analysis, customers' feedback and knowledge gained from several dozen systems implemented in online advertising services, there are three basic formats used by content providers: XML, CSV and JSON. These formats are included in the implemented innovative solution.

The invention that supports data import, created by Sensi Soft and hereinafter referred to as an importer, has the ability to work in multiple modes, depending on the format data, which has been sent to it and the method of how the data have been sent to it.

According to the invention, the method of reading and writing data based on the document repository in advanced advertising services (wherein the documents are information carriers containing objects representing the advertising or auction data type and metadata - content related to the object, and are in a fixed format (in particular XML, CSV, or JSON)) includes the following steps:
a) Data verifcation
b) Submittal of verified data to converter, which converts the data to the chosen internal format of the importer.
c) Transfer of data in the aforementioned internal format of the importer from the converter to the transformer;
d) Transfer data from transformer to the next subsystem.
e) Creation of the standard document type AdvertDocument in JSON format with created and verified data by the aforementioned subsystem.
f) Separation of the advertising or auction data type from metadata content and processing them separately, preferably in multiple queues.
g) Linking of advertising or auction data with metadata and saving them in the database.

In addition, beneficial step before step (a) is:
- Importing Data Using importer.

In addition, beneficial step before step (a) is:
- Reading data from downloaded files or files in a specific location using a reader.

Another beneficial step is:
- Creating a file format definition XSLT from data sent in XML format, based on the parameters sent in the aforementioned XML format and pre-definable by application's repeating elements, wherein a file format definition XSLT is sent to the transformer and is used in step (a) to verify the correctness of data.

Preferably, the method is performed on two or more computers simultaneously.

Preferably, in step (g) the data is stored in two independent databases, especially databases like Elastic Search or Riak

Preferably, the aforementioned objects are audio, video, image files or files with geographical information like KML.

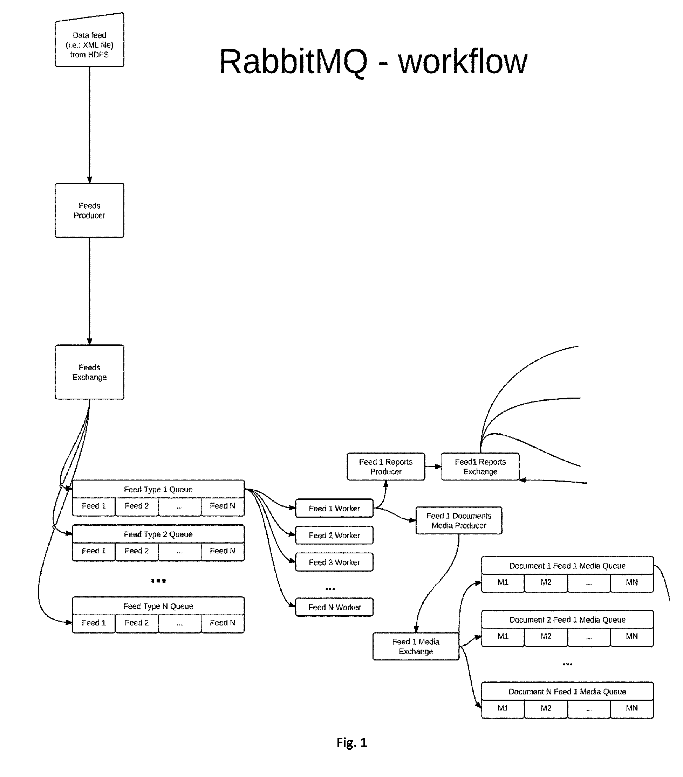

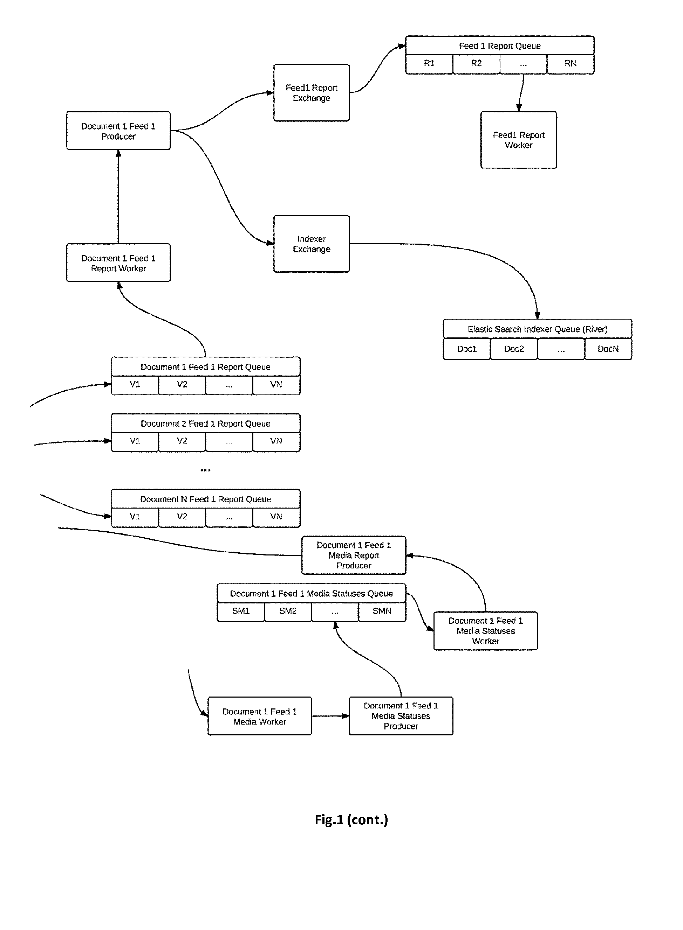

The invention will now be presented in an example (see attached drawing Fig.1), in which:
Fig. 1 shows schematically simplified flow of information on how to read and write data according to the invention.

### A positive example invention

### Description of the flow of information in data storage system

Implemented solution is based on a few basic assumptions:
- Distributed file systems are used.
- The system for parallel tasks uses possibility of a simple to startup of several parallel detectors (the so-called *node* and is written in language (Erlang) (selected solution: server RabbitMQ);
- Tasks are processed on multiple machines (so-called instances) at the same time.
- The system uses two independent databases (Elastic Search and Riak) in order to increase reliability.
- The system manages and manipulates media files (audio files, video files, image files and any other files containing metadata).

The above assumptions were created as a result of our analysis, consisting of thorough and advanced testing of technology solutions, taking into account the many years of experience of the project team members gained in creating advanced advertising services for foreign, multinational companies. The designed concept has been built taking into account the most common problems described and reported by partners of Sensi Soft.

In the solution developed by Sensi Soft, we have to deal with the document concept that is an object that contains two basic elements:
- Advertising or auction data content
- Metadata content, that is data related to the object (files, links, additional details as i.e. the manufacturer, year, place, etc.)

A document can be in the specified format (i.e., XML, CSV, JSON), which will be operated by the data aggregation system. The collected data will be sent to the application, which retrieves and stores it on distributed file system, which automatically promotes them further to all application instances.

The next step is to create a cyclically run requests to download data to be processed by the system. As a result of this request, the so called *worker* is created which automatically recognizes the type of data and places it in the appropriate queuing system, where only this type of data is stored and that the data is correct. For each type of data a separate worker is created.

Then, the pre-processed documents are divided into basic data and accompanying data, and then separately processed. It is worth noting, that the metadata content (mainly graphic files) are processed separately in order to allow simultaneous processing of multiple objects in multiple queues. At the end of their process, they are combined with the basic aggregated data and placed in document databases. The result of the process is also an advanced report containing the results of the aggregation system and the number of properly processed and linked data.

Below is the closer look at the individual operations (processes) according to the invention and the computer system, on which this is implemented:

### 1. Date Feed

Source of data processed by the system. Retrieved from distributed data system such as: HDFS (Hadoop Distributed File System)

### 2. Feeds Producer

An innovative building mechanism from the existing sources of data (the so-called feed) to the aggregation system.

### 3. Feeds Exchange

Verification mechanism, that is preliminary identification of existing messages (a single queue element - URI to data + metadata associated with feed) and dividing them into appropriate groups.

### 4. Feed Type Queue (multiple)

The queuing system containing multiple queues of individual feeds for processing and verifying, originating from different sources (queue CSV, JSON, XML).

### 5. Feed worker (multiple)

Part of the system responsible for reading document feeds, verifying the standard correctness and encapsulation for further processing.

### 6. Feed Reports Producer

The application mechanism responsible for generating report indicating the status of processed documents.

### 7. Feed Documents Media Producer

A unique mechanism of handling metadata, collection, analysis, and placing data ready for processing in a place suitable for applications.

### 8. Feed Media Exchange

The propagation data (especially media) in the appropriate queues.

### 9. Document Feed Media Queue (multiple)

The queuing System containing the queues assigned to individual documents, which in turn carry supporting information, which requires further processing (i.e., video files, image files, files with geographical information KML and other data).

### 10. Document Feed Media Producer (multiple)

The system for processing supporting documents (mainly associated with multimedia files).

### 11. Document Feed Media Statuses Producer

The application which indicates the status operations performed by worker processing objects (generated from Document Feed Media producer).

### 12. Document Feed Media Status Queue

The queuing system containing information on the status of processed supporting data.

### 13. Document Feed Media Statuses Worker

The mechanism that gathers data on the statuses of the different supporting data.

### 14. Document Feed Media Report Producer

The application responsible for placing information on processed data and relations associated with them (links) with specific documents. This element of the system reports to a Feed Reports Exchange mechanism.

### 15. Document Feed Report Queue (multiple)

The queuing system containing queues to the objects that transfer information about the final status of processed tasks.

### 16. Document Feed Report Worker

Proprietary mechanism responsible for the processing and producing of reports incoming from the queueing systems.

### 17. Document Feed Producer

A key, innovative mechanism which gathers data that supports the aggregation system of the earlier processed documents.

### 18. Feed Report Exchange

The mechanism involved in preparing the final report distribution to the appropriate queue.

### 19. Feed Report Queue

The queueing system containing the queue of objects forming the final report for a particular, processed source.

### 20. Feed Report Worker

A mechanism for the creation of a final, analytical report from the processed data.

### 21. Indexer Exchange

The mechanism that deals with distribution of the data processed to document databases.

### 22. Elastic Search Indexer Queue (River) *

The queueing system containing a list of documents to be placed in the document database (noSQL) Elastic Search.

### 23. Riak Indexer Queue

The queueing system containing a list of documents to be placed in the document database (noSQL) Riak.

### 24. Elastic Search

Document database, wherein aggregated data will be stored.

### 25. Riak

Redundant (secondary) document database wherein aggregated data will be stored.

The invention has been tested by Sensi Soft. It is currently used by the company customers, especially The Flyer (http://www.theflyer.com), which through the invention shall aggregate advertising data received from its partners and exports them to its own advertising portal. Currently, 15,000 classified ads are processed per day.

The customers' use of the invention does not result in disclosure.

Work is underway, which would allow the launch of the invention to companies like PennysaverUSA and Booksy International.

## Claims

1. A method of reading and writing data based on a document repository for the advanced advertising services, where the documents contain objects - that is, adverting or auction data content and metadata content - that is related to the object, and are in a fixed format, especially in XML, CSV, or JSON
**characterized in that** it includes the following steps:
a) Data verification
b) Submittal of verified data to converter, which converts the data to the chosen internal format of the importer.
c) Transfer of data in the aforementioned internal format of the importer from the converter to the transformer.
d) Transfer data from transformer to the next subsystem.
e) Creation of the standard document type AdvertDocument in JSON format with created and verified data by the aforementioned subsystem.
f) Separation of the advertising or auction data type from metadata content and processing them separately, preferably in multiple queues.
g) Linking of advertising or auction data with metadata and saving them in the database.

2. The method according to claim 1 **characterized in that** before step (a) the following steps needs to be taken:
• Importing Data Using importer.

3. The method according to claim 1 or 2, **characterized in that** an additional step before the stage (a) includes:
• Read the data from files downloaded or located in a specific location using a reader.

4. The method according to claim 1, 2, or 3, **characterized in that** additional step before the stage (a) includes:
• Creating a file format definition XSLT from data sent in XML format, based on the parameters sent in the aforementioned XML format and pre-definable by application's repeating elements, wherein a file format definition XSLT is sent to the transformer and is used in step (a) to verify the correctness of data.

5. The method according to any one of the claims 1 to 4, **characterized in that** the method is performed on two or more computers simultaneously.

6. The method according to any of preceding claims, **characterized in that** that in step (g) the data is stored in two independent databases, especially databases like Elastic Search or Riak

7. The method according to any of preceding claims, **characterized in that** the said objects are audio, video, image files or files with geographical information like KML.
